# FASCICULE DE BREVET EUROPEEN

(11) **EP 0 637 123 B1**
(45) Date de publication et mention de la délivrance du brevet: **24.09.1997**
(21) Numéro de dépôt: 94410054.4
(22) Date de dépôt: 26.07.1994
(51) Int. Cl.: H02N 2/16

(54) **Moteur à ondes acoustiques de surface**
Akustischer Oberflächenwellenmotor
Surface acoustic wave motor

(30) Priorité: 30.07.1993 FR 9309570
(43) Date de publication de la demande: 01.02.1995
(73) Titulaire: CROUZET Automatismes, 26000 Valence (FR)
(72) Inventeur: Nogarede, Bertrand, Laboratoire d'Electrotechnique, F-31070 Toulouse Cédex (FR)
(74) Mandataire: de Beaumont, Michel

(56) Documents cités:
- PATENT ABSTRACTS OF JAPAN vol. 012 no. 225 (E-626) ,25 Juin 1988 & JP-A-63 018975 (MURATA MFG CO LTD) 26 Janvier 1988,
- PATENT ABSTRACTS OF JAPAN vol. 013 no. 525 (E-850) ,22 Novembre 1989 & JP-A-01 214271 (MATSUSHITA ELECTRIC IND CO LTD) 28 Août 1989,
- PATENT ABSTRACTS OF JAPAN vol. 014 no. 328 (E-0952) ,13 Juillet 1990 & JP-A-02 111269 (FUJITSU LTD) 24 Avril 1990,

## Description

La présente invention conoerne un moteur à ondes acoustiques de surface.

Des moteurs à ondes acoustiques de surface ont déjà été décrits, par exemple, dans le brevet des Etats-Unis d'Amérique 4 562 374 de T. Sashida. Le principe de fonctionnement d'un tel moteur est illustré en figure 1 du brevet Sashida reproduite dans la figure 1 ci-jointe. Une onde progressive de surface de type onde de Rayleigh produite à la surface d'un corps élastique fixe 1 provoque à la surface de ce corps des ondulations. Si une pièce mobile 2 est pressée contre le corps 1, elle sera entraînée par le déplacement des sommets A-A' de ces ondulations. Les sommets A-A' parcourent une trajectoire elliptique Q et leur vitesse de déplacement transversal est liée à la fréquence d'oscillation et à l'amplitude de leur déplacement. En pratique, la fréquence d'excitation des ondes de surface doit être voisine d'une fréquence de résonance du corps à la surface duquel on veut produire ces ondes et cette fréquence ne peut être modifiée que dans une petite plage si l'on veut garder une amplitude non-négligeable (par exemple de l'ordre de 10 µm) des déplacements des sommets orthogonalement à la surface dans laquelle sont formées les ondulations. Un léger désaccord de fréquence par rapport à la fréquence de résonance se traduit par une variation importante d'amplitude. Ainsi, la relation entre la vitesse de déplacement dans la direction de la flèche N des sommets A et A' et la fréquence d'excitation est une relation non-linéaire complexe.

Le moteur à ondes acoustiques de surface du brevet des Etats-Unis d'Amérique 4 562 374 présente les avantages d'un faible bruit (puisque la fréquence du signal d'excitation se situe dans une plage non-audible de par exemple 20 à 100 kHz), d'un relativement bon rendement, d'un faible encombrement et d'un faible poids pour un couple donné, et de l'existence d'un couple de maintien à l'arrêt (c'est-à-dire que, quand aucun signal n'est appliqué, la pièce mobile 2 est appliquée contre la pièce fixe 1 et qu'une force de frottement non-négligeable existe entre elles).

Néanmoins, ce moteur présente l'inconvénient de ne pouvoir être commandé en vitesse autrement qu'en prévoyant un système de capteur et de boucle de réaction. Il en est de même si l'on veut commander ce moteur en position. L'utilisation de tels capteurs et boucles d'asservissement entraine une complexification importante du moteur et un coût élevé qui détruit les avantages premiers de ce moteur.

Ainsi, un objet de la présente invention est de prévoir un moteur du type à ondes progressives qui soit commandable en vitesse et/ou en position directement par une consigne prédéterminée, sans qu'il soit nécessaire de prévoir de capteurs de vitesse ou de position et de boucles de réaction associées.

Pour atteindre ces objets, la présente invention prévoit un moteur comprenant deux pièces mobiles l'une par rapport à l'autre présentant des faces en regard en contact l'une avec l'autre, des moyens associés à chacune des pièces pour produire sur chacune des faces en regard des ondes acoustiques de surface progressives de même direction, et des moyens de commande pour ajuster la fréquence ou la phase relative desdites ondes progressives.

Selon un mode de réalisation de la présente invention, les deux pièces mobiles sont de structures sensiblement identiques et présentent une même fréquence acoustique de résonance.

Selon un mode de réalisation de la présente invention, les ondes acoustiques de surface progressives créées sur chacune des deux pièces présentent des fréquences voisines de leur fréquence de résonance.

Selon un mode de réalisation de la présente invention, les moyens de commande permettent d'appliquer une différence de phase déterminée par rapport à une phase de référence entre les ondes progressives appliquées à chacune des deux pièces, d'où il résulte que l'une des pièces se déplace d'une quantité déterminée par rapport à l'autre.

Selon un mode de réalisation de la présente invention, les ondes acoustiques de surface progressives créées sur chacune des deux pièces présentent des fréquences distinctes, voisines de ladite fréquence de résonance, d'où il résulte que l'une des pièces a une vitesse de rotation déterminée par rapport à l'autre.

Selon un mode de réalisation de la présente invention, les pièces mobiles sont deux anneaux coaxiaux présentant des couronnes en regard en contact.

Selon un mode de réalisation de la présente invention, les ondes progressives sont appliquées par des portions de céramique piézoélectrique constituant des secteurs de polarités opposées d'un anneau de céramique collé aux faces de chacune des pièces opposées à leurs faces en contact.

Un avantage supplémentaire du moteur selon la présente invention est qu'il présente un couple encore plus élevé que celui du moteur classique du fait que les ondulations créées simultanément sur chacune des deux pièces peuvent être considérées comme des dents de deux engrenages qui coopèrent. Le risque de glissement entre la pièce mobile et la pièce fixe est donc plus faible qu'avec la disposition antérieure.

Ces objets, caractéristiques et avantages de la présente invention seront exposés plus en détail dans la description suivante de modes de réalisation particuliers faite en relation avec les figures jointes parmi lesquelles :
la figure 1 illustre schématiquement le principe d'un système d'entraînement à ondes acoustiques de surface selon l'art antérieur ;
la figure 2 illustre schématiquement le principe d'un système d'entraînement à ondes acoustiques de surface selon la présente invention ;
la figure 3 représente schématiquement l'allure d'un système moteur de type axial selon la présente invention ;
la figure 4 représente un exemple de disposition de céramique piézoélectrique d'excitation pour une armature du système moteur de la figure 3 ;
la figure 5 représente un exemple de réalisation d'un système moteur selon la présente invention ;
la figure 6 représente très schématiquement un mode de commande d'un système moteur selon la présente invention ; et
la figure 7 représente de façon un peu plus détaillée un mode de commande d'un système moteur selon l'invention.

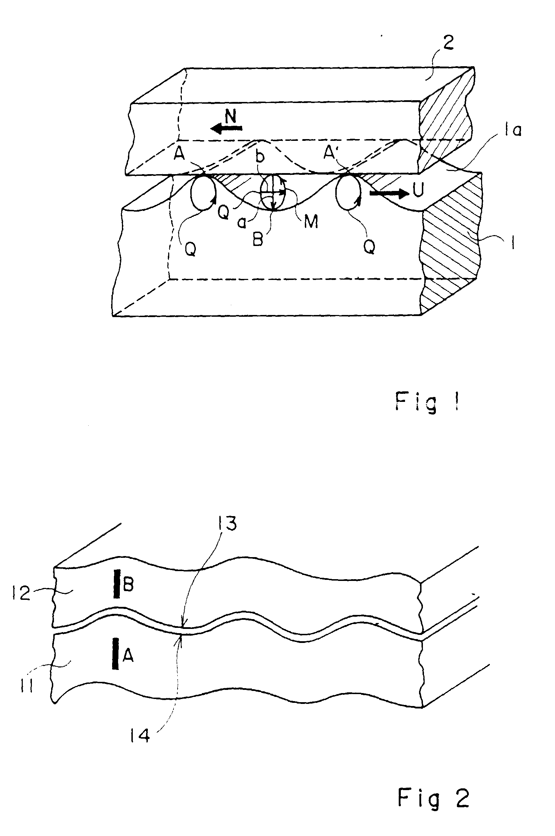

La figure 2 illustre très schématiquement le principe de base d'un système moteur selon la présente invention. Celui-ci comprend deux pièces 11 et 12 dont l'une est mobile par rapport à l'autre, ces pièces ayant des faces en regard respectives 13 et 14. Chacune des pièces 11 et 12 est excitée acoustiquement pour créer dans les faces en regard 13 et 14 des ondes acoustiques de surface progressives, plus exactement des ondes de Lamb de même direction, les deux pièces ayant des épaisseurs pas trop élevées devant la longueur d'onde des signaux d'excitation. Ainsi, si l'on part d'une position de repos pour laquelle un repère A de la pièce 11 est en regard d'un repère B de la pièce 12 et que les deux ondes progressives sont de même fréquence et de même phase, les deux pièces ne se déplaceront pas l'une par rapport à l'autre et les repères A et B resteront l'un en face de l'autre.

Si on applique un déphasage ϕ à l'onde de surface appliquée à la pièce 12 par rapport à la phase de l'onde de surface appliquée à la pièce 11, on obtiendra un déplacement x = λϕ/2π où λ est la longueur d'onde des ondes de surface. On obtient ainsi un déplacement parfaitement déterminé qui peut par exemple conduire à la réalisation d'un moteur pas à pas ou d'un dispositif de positionnement.

Si la phase de l'onde progressive créée sur la pièce 12 varie continûment par rapport à la phase de l'onde progressive sur la pièce 11, c'est-à-dire que la pulsation ω' de l'onde sur la pièce 12 est distincte d'une valeur Δω de la pulsation de l'onde de surface sur la pièce 11, la pièce 12 se déplacera par rapport à la pièce 11 à une vitesse v = λΔω/2π.

Dans un mode de réalisation préféré de la présente invention où les pièces 11 et 12 sont comme on le verra ci-après des anneaux qui présentent des couronnes appliquées l'une contre l'autre, l'application d'un déphasage ϕ entre les deux ondes entraînera une rotation angulaire d'une valeur θ = ϕ/n où n est le rang du mode de vibration excité sur les deux anneaux. De même, si l'on applique sur les pièces circulaires des ondes de surface présentant une différence de fréquence Δω, l'une des pièces tournera par rapport à l'autre à une vitesse angulaire Ω = Δω/n.

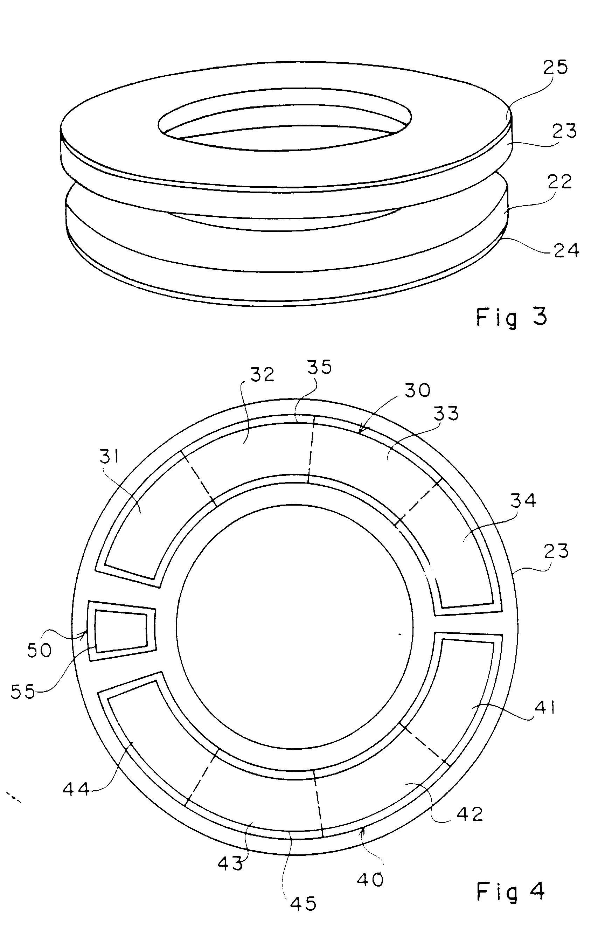

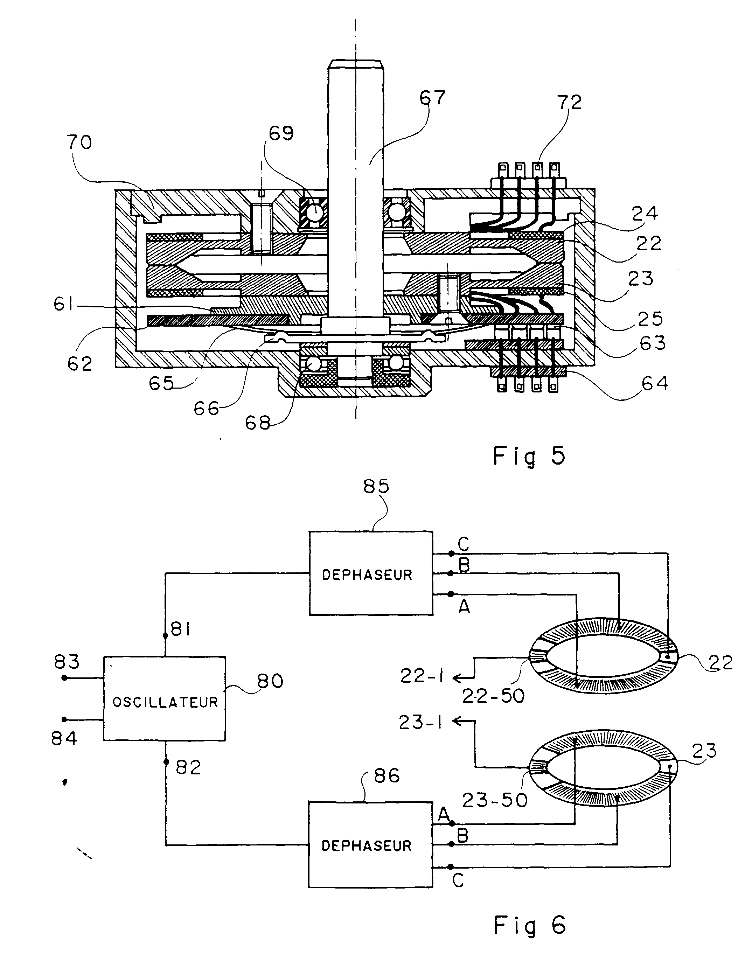

La figure 3 représente très schématiquement un mode de réalisation d'un moteur selon la présente invention. Celui-ci comprend un stator 22 en forme d'anneau et un rotor 23 également en forme d'anneau. Ce stator et ce rotor seront constitués de pièces sensiblement identiques pour présenter une même fréquence de résonance pour les ondes acoustiques de surface. Des éléments piézoélectriques 24 et 25 conçus pour exciter un mode de résonance particulier de vibration dans les anneaux sont respectivement associés au rotor et au stator. Bien entendu, et comme cela sera décrit ci-après en relation avec la figure 5, il est prévu des moyens pour solliciter l'un contre l'autre les anneaux 22 et 23 et rendre l'anneau 23 solidaire d'un axe lui permettant une rotation par rapport à l'anneau 22.

Les éléments piézoélectriques d'excitation pourront être tout moyen connu tel que ceux décrits par exemple dans le brevet américain susmentionné.

La figure 4 représente un exemple de système d'excitation 25 associé à l'anneau 23. Ce système est constitué d'un anneau de céramique piézoélectrique polarisée pour former des secteurs actifs de l'une ou l'autre de deux polarités et des zones neutres. On distingue un premier ensemble de secteurs 30 correspondant sensiblement à une moitié de la surface de l'anneau et un deuxième ensemble de secteurs 40 correspondant sensiblement à la deuxième moitié de l'anneau. On prévoit également de préférence un secteur supplémentaire 50 correspondant à une petite portion de la surface de l'anneau et destiné à servir de détecteur de vibration. Les ensembles 30 et 40 sont respectivement divisés en un certain nombre de secteurs, 31 à 34 et 41 à 44. Chaque secteur présente une polarisation opposée à celle de son voisin de sorte que l'application d'une tension de polarité donnée entre les deux faces de deux secteurs de polarités opposées produise des déplacements de sens opposé, par exemple une contraction pour l'un et une dilatation pour l'autre. La face apparente de la portion de céramique 30 est revêtue d'une première électrode 35, la face apparente de la portion 40 est revêtue d'une deuxième électrode 45 et la face apparente de la portion 50 est revêtue d'une électrode 55. Une quatrième électrode, non représentée, constitue l'électrode de face arrière des trois céramiques 30, 40, 50. Des ondes déphasées de 90° l'une par rapport à l'autre sont appliquées entre chacune des électrodes 35 et 45 et l'électrode de face arrière. Le nombre et la surface des secteurs sont choisis pour exciter un mode de vibration déterminé, à condition bien entendu d'appliquer la fréquence appropriée sur les électrodes. Par exemple, pour exciter le mode de vibration 9, chacun des secteurs d'une polarité occupe sensiblement le dix-huitième de la périphérie de l'anneau.

Dans ce qui précède, on a indiqué que des éléments piézoélectriques étaient collés sur les anneaux moteurs 22 et 23. Tout autre mode d'application d'un système d'excitation pourra être utilisé, par exemple des couches de céramique piézoélectrique déposées sur les anneaux.

La figure 5 représente une vue en coupe axiale d'un mode de réalisation d'un moteur selon la présente invention. On y retrouve les rotor et stator 22 et 23 et leurs céramiques piézoélectriques d'excitation 24 et 25. Le rotor est fixé à un support d'anneau 61 sur lequel est montée une plaquette d'alimentation 62 portant des contacts glissants 63 en contact avec des contacts correspondant d'un connecteur de rotor 64. L'ensemble rotor est solidaire par l'intermédiaire d'un élément de compression élastique 65 d'un anneau d'entraînement 66 lié à un arbre de rotor 67. Cet arbre tourne par l'intermédiaire de roulements 68 et 69 dans un bâti 70 sur lequel est monté l'anneau de stator 22. Il est également prévu un connecteur 72 pour les céramiques piézoélectriques d'excitation du stator.

En outre, bien que cela ne soit pas représenté, les faces appliquées l'une contre l'autre du rotor et/ou du stator portent un revêtement destiné à assurer un coefficient de frottement élevé. Ce revêtement devra également avoir une grande dureté. Les anneaux de rotor et de stator sont par exemple en bronze béryllium.

Bien entendu, la figure 5 ne représente qu'un exemple de réalisation d'un moteur selon la présente invention. On préfère comme on l'a vu précédemment utiliser un moteur à symétrie axiale dans lequel les deux pièces statorique et rotorique sont également symétriques par rapport à un plan perpendiculaire à l'axe, ceci afin d'obtenir un stator et un rotor présentant simplement les mêmes fréquences de résonance. On pourra néanmoins adapter l'invention à des systèmes à excitation par une couronne périphérique comme dans le brevet américain susmentionné ou encore à des systèmes linéaires.

Dans le cadre du mode de réalisation présenté précédemment, on a prévu une alimentation des excitateurs piézoélectriques du rotor par un système à contacts glissants. D'autres systèmes pourront avantageusement être utilisés. Par exemple, dans le cadre d'applications où le moteur est amené à réaliser seulement une portion de tour ou un petit nombre de tours avant d'être amené à tourner en sens inverse, on pourra simplement réaliser les contacts vers le rotor par des fils souples. Egalement, étant donné que la fréquence d'excitation des céramiques piézoélectriques est relativement élevée, de l'ordre de 40 kHz (alors que, rappelons-le, la vitesse de rotation est fixée par la différence de fréquence entre rotor et stator), on pourra avantageusement utiliser une alimentation par transformateur tournant - ce qui est incompatible avec des moteurs classiques dans lesquels la fréquence d'alimentation est liée à un facteur près (de l'ordre de 2 à 10) à la fréquence de rotation, c'est-à-dire est couramment de l'ordre de 20 à 100 hertz, ce qui est incompatible avec un bon rendement d'un transformateur tournant de dimension réduite.

L'homme de métier saura réaliser un système à oscillateur et déphaseurs pour commander la structure selon la présente invention. Un schéma de principe d'un tel système d'alimentation est représenté sous forme de blocs en figure 6.

En figure 6, un oscillateur 80 comprend deux sorties 81 et 82. En l'absence de signal de commande, ces deux sorties sont identiques, et correspondent à un mode de résonance choisi des anneaux 22 et 23.

En présence d'un signal de commande sur une borne de commande de position 83, un déphasage déterminé est appliqué sur la borne 81 par rapport à la phase d'oscillation sur la borne 82 et, en présence d'un signal sur une borne de commande de vitesse de rotation 84, la fréquence de la sortie 81 est décalée de Δω par rapport à la fréquence sur la borne de sortie 82. Chacune des sorties 81 et 82 est envoyée à un bloc amplificateur-déphaseur, respectivement 85 et 86, qui fournit sur des sorties A et B des signaux déphasés de 90° par rapport à une borne de référence C. Ces signaux sont appliqués aux secteurs de céramique piézoélectrique des stator et rotor 22 et 23 de la façon exposée en relation avec la figure 4. Comme cela a été exposé en relation avec la figure 4, chacun des secteurs comprend en outre un élément piézoélectrique de détection, respectivement 22-50 et 23-50 qui fournissent des signaux 22-1 et 23-1 caractéristiques de l'amplitude des ondes de surface sur chacun des anneaux. Ces signaux peuvent être utilisés de façon classique pour permettre des réglages d'amplitude des amplificateurs 85 et 86 ou un réglage de fréquence centrale de l'oscillateur 80.

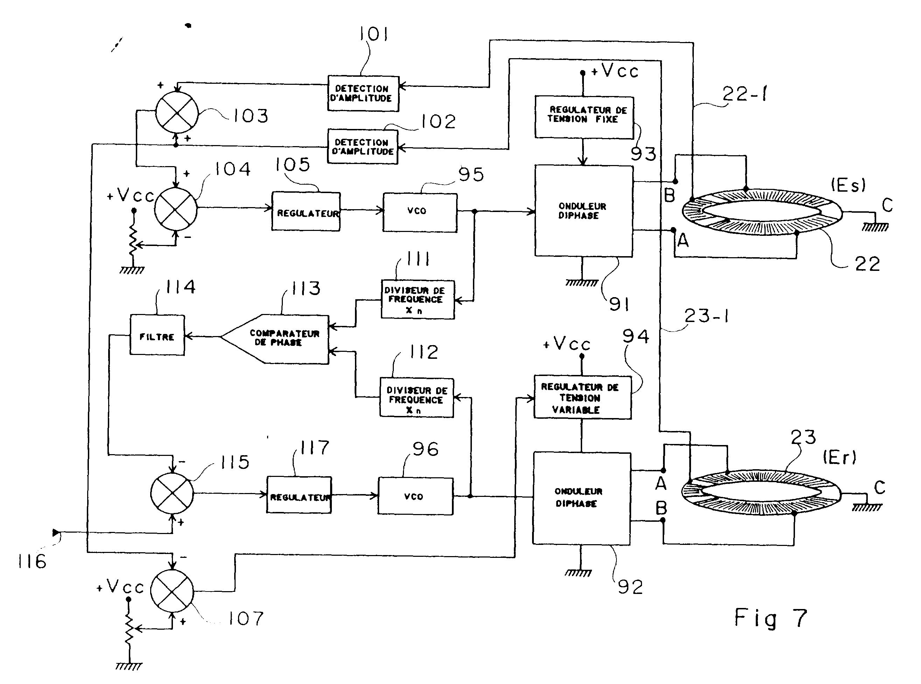

La figure 7 représente un exemple de réalisation plus détaillé d'un schéma de commande d'une structure selon l'invention. On retrouve en figure 7 les éléments piézoélectriques de commande du stator 22 et du rotor 23 qui comprennent des bornes de commande respectives A, B et C et des bornes de fourniture de signal de détection 22-1 et 23-1. Les bornes A et B respectives sont alimentées par des onduleurs diphasés respectifs 91 et 92 connectés à une alimentation continue +VCC par l'intermédiaire de régulateurs respectifs 93 et 94. Le régulateur 93 est de préférence un régulateur fixe et le régulateur 94 est un régulateur réglable. Les onduleurs diphasés sont respectivement commandés par des oscillateurs à fréquence de sortie commandée par une tension (VCO) 95 et 96 qui sont pilotés de la façon qui sera exposée ci-après.

Les signaux 22-1 et 23-1 sont fournis à des détecteurs d'amplitude respectifs 101 et 102. Un sommateur 103 fournit la somme des signaux de sortie des détecteurs 101 et 102. Cette somme est envoyée à un amplificateur différentiel ou soustracteur 104 qui en soustrait un niveau de référence. La différence, ou signal d'erreur est envoyée à un régulateur 105 dont la sortie commande l'oscillateur 95.

Le détecteur d'amplitude 102 a également une sortie qui est fournie à un soustracteur 107 qui en soustrait une tension de référence pour commander de façon choisie le régulateur 94 de commande d'amplitude de l'onduleur diphasé 92.

Les signaux de sortie des oscillateurs 95 et 96 sont respectivement envoyés à des diviseurs de fréquence par n 111 et 112, n étant le rang du mode de vibration excité. Les sorties des signaux divisés par les diviseurs 111 et 112 sont appliquées à un comparateur de phase 113 dont la sortie est appliquée par l'intermédiaire d'un filtre 114 à une première entrée d'un soustracteur (ou amplificateur différentiel) 115 dont l'autre entrée, 116, reçoit un signal de consigne de position. La sortie de l'amplificateur différentiel 115 est appliquée à la borne de commande de l'oscillateur 96 par l'intermédiaire d'un régulateur 117.

On dispose ainsi d'un moteur selon l'invention dont la position est commandable par le choix du signal continu appliqué sur la borne 116.

Ainsi, la présente invention atteint bien les objets fixés et le moteur selon l'invention présente les avantages suivants :
- excitation à haute fréquence et donc à faible bruit,
- rotation lente, ne nécessitant donc pas l'utilisation de réducteur,
- couple de maintien à vide élevé,
- précision de commande de positionnement,
- précision de commande de vitesse,
- faible constante de temps,
- couple d'entraînement élevé et sensiblement indépendant de la vitesse de rotation.

## Revendications

1. Moteur comprenant :
deux pièces (11, 12 ; 22, 23) mobiles l'une par rapport à l'autre présentant des faces en regard (13, 14) en contact l'une avec l'autre,
des moyens (24, 25) associés à chacune des pièces pour produire sur chacune des faces en regard des ondes acoustiques de surface progressives de même direction, et
des moyens de commande (91, 92) pour ajuster la fréquence ou la phase relative desdites ondes progressives.

2. Moteur selon la revendication 1, caractérisé en ce que les deux pièces mobiles sont de structures sensiblement identiques et présentent une même fréquence acoustique de résonance.

3. Moteur selon la revendication 2, caractérisé en ce que les ondes acoustiques de surface progressives créées sur chacune des deux pièces présentent des fréquences voisines de ladite fréquence de résonance.

4. Moteur selon la revendication 3, caractérisé en ce que les moyens de commande permettent d'appliquer une différence de phase déterminée par rapport à une phase de référence entre les ondes progressives appliquées à chacune des deux pièces, d'où il résulte que l'une des pièces se déplace d'une quantité déterminée par rapport à l'autre.

5. Moteur selon la revendication 2, caractérisé en ce que les ondes acoustiques de surface progressives créées sur chacune de ces deux pièces présentent des fréquences distinctes, voisines de ladite fréquence de résonance, d'où il résulte que l'une des pièces a une vitesse de rotation déterminée par rapport à l'autre.

6. Moteur selon l'une quelconque des revendications 1 à 5, caractérisé en ce que les pièces mobiles sont deux anneaux coaxiaux présentant des couronnes en regard en contact.

7. Moteur selon l'une quelconque des revendications 1 à 6, caractérisé en ce que les ondes progressives sont appliquées par des portions de céramique piézoélectrique constituant des secteurs de polarités opposées d'un anneau collé aux faces de chacune des pièces opposées à leurs faces en contact.

## Patentansprüche

1. Motor bzw. Stellantrieb, welcher umfaßt:
zwei relativ zueinander bewegliche Teile (11,12; 22,23) mit einander gegenüberstehenden und einander berührenden Flächen (13,14),
jeweils jedem der Teile zugeordnete Mittel (24,25) zur Erzeugung von in gleicher Richtung fortschreitenden akustischen Oberflächenwellen auf jeder der gegenüberstehenden Flächen,
sowie Steuermittel (91,92) zur Einstellung der relativen Frequenz oder Phase der genannten fortschreitenden Wellen.

2. Motor bzw. Stellantrieb nach Anspruch 1, dadurch gekennzeichnet, daß die beiden beweglichen Teile im wesentlichen gleichartig ausgebildet sind und dieselbe akustische Resonanzfrequenz besitzen.

3. Motor bzw. Stellantrieb nach Anspruch 2, dadurch gekennzeichnet, daß die auf jedem der beiden Teile erzeugten fortschreitenden akustischen Oberflächenwellen Frequenzen benachbart der genannten Resonanzfrequenz aufweisen.

4. Motor bzw. Stellantrieb nach Anspruch 3, dadurch gekennzeichnet, daß die Steuermittel die Einstellung eines vorgegebenen Phasenunterschieds gegenüber einer Bezugsphase zwischen den fortschreitenden Wellen, mit welchen die beiden Teile jeweils beaufschlagt werden, gestatten, mit der Folge, daß das eine der beiden Teile sich relativ gegenüber dem anderen Teil um einen vorgegebenen Betrag verschiebt.

5. Motor bzw. Stellantrieb nach Anspruch 2, dadurch gekennzeichnet, daß die jeweils auf jedem der beiden Teile erzeugten fortschreitenden akustischen Oberflächenwellen der genannten Resonanzfrequenz benachbarte distinkte Frequenzen aufweisen, mit der Folge, daß das eine der Teile eine vorgegebene Rotationsgeschwindigkeit relativ gegenüber dem anderen Teil besitzt.

6. Motor bzw. Stellantrieb nach einem der Ansprüche 1 bis 5, dadurch qekennzeichnet, daß die beweqlichen Teile zwei koaxiale Ringe mit gegenüberstehenden, einander berührenden Kränzen sind.

7. Motor bzw. Stellantrieb nach einem der Ansprüche 1 bis 6, dadurch gekennzeichnet, daß die Beaufschlagung mit den fortschreitenden Wellen mittels Bereichen aus piezoelektrischer Keramik erfolgt, welche Sektoren entgegengesetzter Polarität eines Rings sind, der jeweils auf jedem der beiden Teile auf dessen zu ihren gegenüberstehenden Flächen entgegengesetzten Fläche klebbefestigt ist.

## Claims

1. A motor including:
two parts (11, 12; 22, 23) that are mobile one with respect to the other and have facing surfaces (13, 14) contacting each other,
means (24, 25) associated with each part to produce on each facing surface progressive surface acoustic waves of the same direction, and
control means (91, 92) for adjusting the relative frequency or phase of said progressive waves.

2. The motor of claim 1, characterized in that said two parts are substantially identical and have the same resonance acoustic frequency.

3. The motor of claim 2, characterized in that the progressive waves generated on the two parts have frequencies close to said resonance frequency.

4. The motor of claim 3, characterized in that the control means apply a predetermined phase difference with respect to a reference phase between the progressive waves applied to each of the two parts, whereby one of the parts moves by a predetermined distance with respect to the other.

5. The motor of claim 2, characterized in that the progressive waves generated on each of said two parts have distinct frequencies, close to said resonance frequency, whereby the rotation speed of one of the parts is predetermined with respect to the other.

6. The motor of any of claims 1 to 5, characterized in that said mobile parts are two coaxial rings with facing rims contacting each other.

7. The motor of any of claims 1 to 6, characterized in that the progressive waves are applied by piezoelectric ceramic portions constituting sectors of opposite polarities of a ring bonded to the surfaces of each part that is opposite to their contacting surfaces.
